Europäisches Patentamt

European Patent Office

Office européen des brevets

(19)

(11) **EP 1 259 078 A1**

(12) **EUROPEAN PATENT APPLICATION**

(43) Date of publication:
**20.11.2002 Bulletin 2002/47**

(51) Int Cl.$^7$: **H04N 7/26**

(21) Application number: **01480036.1**

(22) Date of filing: **14.05.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Institut Eurecom G.I.E.**
**06904 Sophia-Antipolis (FR)**

(72) Inventors:
• **Dugelay, Jean-Luc**
  **06400 Cannes (FR)**
• **Rey, Christian**
  **84220 Gordes (FR)**

(74) Representative: **Schuffenecker, Thierry**
  **97, chemin de Cassiopée,**
  **Domaine de l'étoile**
  **06610 La Gaude (FR)**

(54) **Method of marking a multimedia document having improved robustness**

(57)   A method of marking of a multimedia document $I_{orig}$ by introducing a tattoo or watermark information M within said document, which involves the steps of formatting the watermark by inserting additional Spatial Compensation Bits (SCB) which will be used during the extraction process of the watermark for achieving synchronization of elementary blocks of the image prior to the extraction of the watermark information. The method is particularly adapted for the autosimilarity method based on the fractal analysis and permits the blind extraction of the watermark even when the image was subject to a set of random local transformations or slight global affine transformations. A corresponding extraction process is provided.

Fig. 1

I orig

Compute IFS code — 1

Compute Iref — 2

compute support image Is — 3

Compute AWI message including SCB bits — 4

Convert to BAWB ( I inf0) — 5

Local duplication to generate I inf0.1 — 6

Global duplication to generate I inf 0.2 — 7

Generate I inf1 by noising B=f(Ks) — 8

Modulate I inf_1 to generate I inf2 — 9

Add I inf_2 to Iref — 10

Watermarked image

EP 1 259 078 A1

## Description

### Technical field of the invention

The present invention relates to watermarking techniques and in particular to marking a document such as an digitized image with a high level of robustness and security.

### Background art

The security of computerized documents, and particularly of digitized images, implies being able, at one time or another, to carry out a *marking* (with a hidden message) of these documents in order to distinguish them without ambiguity by means of external information, such as identification, authentication or signature data or any other data.

The techniques known as digital *watermarking* allow the dissimulation of a watermarking tattoo inside an image in order to "sign" it and unequivocally identify it (for instance, the owner, the buyer, an identification number associated with the picture etc... ). Digital information is inserted into an image, so as to be invisible to the eye. The picture is thus signed, for example by its author, the owner of the right on this image, a certifying authority or any authority competent to carry out this signature before broadcasting the considered document, for example its transmission or its marketing. This approach has to deal with the difficulty of conceiving a tattooing that respects a robustness/visibility compromise. Indeed, the added marking information must be sufficiently discrete to remain invisible to the eye because debasing the original work quality would be intolerable. However, as discrete as it is, the information must be very present in the image so as to ensure its perfect restitution even after the image underwent various transformations and processing such as Jpeg compressions, resolution changes, or translations of some pixels.

The robustness of the watermarking mechanism, as well as the capacity to resist to malevolent intrusions, strongly rely upon the existence of a noising process preventing the penetration of the secret mechanism. The noising mechanism is generally involved when the watermark or the tattoo is formatted before it is embedded within the digitized image. However, while noising the tattoo substantially enhances the confidentiality of the secret mechanism and the security of the whole watermarking process, it is clear that the extraction of the watermark is correspondingly rendered much more difficult, particularly when the digitized image undergoes some transformations.

WO 99/45696 entitled "Method for hiding binary data in a digital image" and more particularly EP 1 031 944 entitled "Process for marking a multimedia document, such as an image, by generating a mark" from J.-L. DUGELAY et al, both assigned to the Assignee of the present application, discloses a watermarking mechanism which permits an efficient insertion and blind extraction process of the watermark even in the case of global transformations brought to the digitized image. This is achieved by arranging, prior to de-noising the processed image, a synchronization step based on the determination of the closer transformation which was applied to the digitized image, said "pseudo-inverse" transformation being selected from a dictionary or a predefined set of global transformations. An iteration intervenes on the preceding combinations for a whole collection of elementary transformations extracted from a dictionary, or codebook, and a consistent score is then calculated which is intended to maximize the redundancy effect that was introduced into the marking image on a local and general level, for each transformation. Thanks to that arrangement, the watermarking mechanism permits the blind extraction of the watermark even if the digitized image was subject to some simple transformations, such as a translation, a rotation a cut of some pixels etc...for merely results from the scanning of the printed document.

While the above mentioned mechanism shows to be satisfactory in a number of basic situations where the original image is only slightly altered, it has been shown that the extraction of the watermark might be prevented in the case of malevolent transformations brought to a number of local areas on the digitized images. Such local transformations (which can be randomly operated) are based, for instance, on an affine transformation centered on an anchor. Such local transformations do not substantially modify the image and the subjective effect brought to the reader but might prevent the extraction of the watermark. Since the number of local transformations, and the magnitude brought to the transformation around the anchor may vary in a great range, the known technique does not show to be adapted to process this kind of local transformations since it is not feasible to contemplate compensating all the comprehensive modifications brought to the image.

It is clear that the known mechanisms must be improved with respect to the security issues and should increase the resistance of the watermark and particularly when the digital image is subject to deep alteration, as this is the case for local transformations.

Such is the aim of this invention which proposes to provide an improved watermarking mechanism which permits the insertion of a watermark and then, its blind extraction even in the case where the digitized image has been deeply altered by local random transformations.

## Summary of the invention

The object of the present invention is to provide an enhanced watermark insertion process with improved security.

It is another object of the present invention to provide an improved extraction mechanism of a watermark which works even if the digitized image carrying the watermark is subject to a wide range of local random transformations.

It is another object of the present invention to provide an improved blind extraction process.

These objects are achieved by means of a method for marking of a multimedia document $I_{orig}$ such as an image by introducing a tattoo or Watermark Information (WI) being resistant to local transformations brought to said image, characterized in that it involves the steps of:

- combining said watermark information (WI) with added Spatial Compensation Bits (SCB) used for the purpose of achieving, at a later stage, compensation of possible local moves of elementary portions or blocks of said multimedia document $I_{orig}$, the combination of said watermark information (WI) with said SCB bits producing an aggregate watermark information (AWI), and
- formatting and inserting said aggregate watermark information (AWI) within said multimedia document.

Preferably, the Spatial Compensation Bits (SCB) are interleaved with the original watermark information.

More particularly, there is provided a process which involves the steps of:

- decomposing the initial multimedia document $I_{orig}$ according to a lossy approximation method;
- determining a reference image $I_{ref}$;
- point-by-point subtracting the initial multi-media document $I_{orig}$ and reference image $I_{ref}$, and according to at least one vector ( e.g. the luminance for instance) representative of the image in order to produce a support image $I_s$ ;
- formatting said Watermark Information (WI) so as to obtain an image of the same size as the support image $I_s$ by pre-introducing said SCB bits and at least one level of redundancy;
- noising the result of said formatting with a pseudo random noise in order to produce a primary digital image $I_{inf\,1}$;
- point-by-point combining said primary digital image $I_{inf\,1}$ with said support image $I_s$ so as to generate a secondary digital image $I_{inf\,2}$ ;
- reintroducing said secondary digital image $I_{inf\,2}$ into said reference image $I_{ref}$ for the purpose of producing said watermarked multimedia document.

The secondary digital image $I_{inf\,2}$ is determined from the primary digital image $I_{inf\,1}$ by means of a law of correspondence between primary digital image $I_{inf\,1}$ and said support image $I_s$

In one preferred embodiment, the lossy approximation method is an auto-similarity method based on fractal analysis (i.e. self-similarities), involving the step of computing a Iterated Functions Systems *(IFS)* code by cropping said multimedia document $I_{orig}$ into a set of primitives or *ranges,* which must cover the whole image and by using a basic dictionary Dbase of *domain* primitives. Alternatively, the reference image $I_{ref}$ is determined by means of a lossy approximation method such as a Jpeg coding, or any approach performing a reduction of the image resolution .

Preferably, the formatting step involves the step of:

- generating a Aggregate Watermarking Information (AWI) from the watermark information by adding a set of Spatial Compensation Bits (SCB);
- converting said Aggregate Watermarking Information (AWI) into a Bi-dimensional Aggregate Watermarking Block (BAWB);
- introducing a local redundancy in a vertical and/or horizontal direction for each pixel of said BAWB block in order to produce a first intermediary image $I_{inf\,0.1}$;
- introducing a global redundancy by duplicating the result of said local duplication for the purpose of producing a second intermediary image $I_{inf\,0\,2}$ of the same size than said image $I_s$ ;
- noising said second intermediary image $I_{inf\,0\,2}$ for the purpose of producing said primary digital image $I_{inf\_1}$.

In one embodiment, the aggregate watermark information (AWI) may comprise a watermark information (WI) of 64 bits associated with a set of additional 57 bits of Spatial Compensation Bits (SCB).

The invention also provides a method for extracting a watermark used as signature in a digital document $I'_{orig}$ which comprises the following steps of:

- determining a digital reference document $I'_{ref}$ by means of a lossy approximation method ;

- determining the support image $I'_s$ from the following equation:

$$I'_s = I'_{orig} - I'_{ref};$$

- thresholding said support image $I'_s$ in order to produce a $I'_{inf\_1}$ primary digital information;
- creating a Watermark Information Model (WIM), consisting of a set of labels M1, M2, M3 etc...., to which are added said Spatial Compensation Bits (SCB), and to which is then applied the formatting step of the insertion process for the purpose of creating a primary digital information model $I^*_{inf1}$ ;
- executing a block matching process between said $I'_{inf\_1}$ primary digital information and said primary digital information model $I^*_{inf1}$ for the purpose of compensating local moves brought to said original digital document $I'_{orig}$, and
- extracting said watermark from said $I'_{inf\_1}$ primary digital information.

More particularly, the generation of the primary digital information model $I^*_{inf1}$ involves the steps of:

- computing a Watermark Information Model consisting in a set of labels M1, M2, M3 etc... ;
- introducing said Spatial Compensation Bits (SCB) within said Watermark Information Model (WIM) in order to generate an aggregate Watermark Information Model (AWIM);
- converting said Aggregate Watermark information model (AWMI), into a corresponding Aggregate Watermark Information Block Model (AWIBM);
- introducing a local level of redundancy into the Aggregate Watermark Information Block Model (AWIBM) in order to produce a first intermediate image model ($I^*_{inf\_0.1}$ )
- computing a second intermediate image model ($I^*_{inf\_0.2}$) from said first intermediate image model ($I^*_{inf\_0.1}$) by globally reproducing said first intermediate image model ($I^*_{inf\_0.1}$ );
- noising said second intermediate image model ($I^*_{inf\_0.2}$ ) by means of a secret key for the purpose of producing a primary digital information model ($I^*_{inf1}$ );
- executing a block matching process on said primary digital information model ($I^*_{inf1}$ ) and said $I'_{inf\_1}$ primary digital information based on said SCB synchronization bits.

Preferably, the block matching process is based on the decomposition of both the primary digital information model ($I^*_{inf1}$ ) and the threshold support image $I'_s$ into elementary blocks of NxN pixels. Each block of the former is analyzed for the purpose of researching, into a corresponding vicinity of the latter, a maximum number of the Spatial Compensation Bits (SCB).

In one particular embodiment, the block matching process involves the steps of:

- decomposing said primary digital information model ($I^*_{inf1}$ ) into elementary individual source blocks of nxn pixels,
- for each individual block of nxn pixels, searching a corresponding destination block within said $I'_{inf\_1}$ primary digital information, located in the vicinity of said source block and which maximizes a criterion based on said Spatial Compensation Bits (SCB), and
- for each detected corresponding destination block, reading the contents of said destination block and writing it within said source block,
- repeating the two preceding steps for each individual source block of said primary digital information model ($I^*_{inf1}$ ) until the completion of the compensation of local moves and resynchronization of said $I'_{inf\_1}$ image.

More particularly, for each bit of said elementary block of said primary digital information $I'_{inf\_1}$, ie the thresholded support image $I'_s$:

- if said bit corresponds to a label of said watermark information model , reading the contents of said bit and counting the particular value assigned to said label;
- at the end of the process applying a vote for each label in order to determine the particular value assigned to that label, and corresponding to the originally inserted watermark information.

In one embodiment, the detection of a high number of matching Spatial Compensation Bits (SCB) in both documents are interpreted as the existence of a watermark information within the digital document $I'_{orig}$. Then, in response to said detection, an identification between the contents of the two matching blocks is executed for directly determining the contents of said watermark information in the considered matching blocks.
A set of votes performed on all the matching blocks permit to determine, the contents of the watermark information. As well as an evaluation of the validity of its contents.

Preferably, at least one error correcting code is introduced within the watermark information for the purpose of providing an additional confirmation step of the extracted watermark.

## Description of the drawings

Embodiments of the invention will now be described, by way of examples only, with reference to the accompanying drawings, wherein:

Figure 1 illustrates the basic watermark insertion mechanism.

Figure 2 illustrates an example of the scanning pattern of the watermark binary image.

Figure 3 illustrates the extraction process of the watermark.

Figure 4 and 5 illustrate the Block Matching process.

Figures 6a illustrates the case of a global translation brought to the original image.

Figure 6b illustrates the case of a global slight rotation which is brought to the image.

Figure 6c illustrates the situation of a local random geometric transformation of the image which can be compensated by the process of the invention.

Figure 7a, 7b, 7c and 7d are restively frequency graphs of the classical watermark insertion and the process of the invention.

## Description of the preferred embodiments of the invention

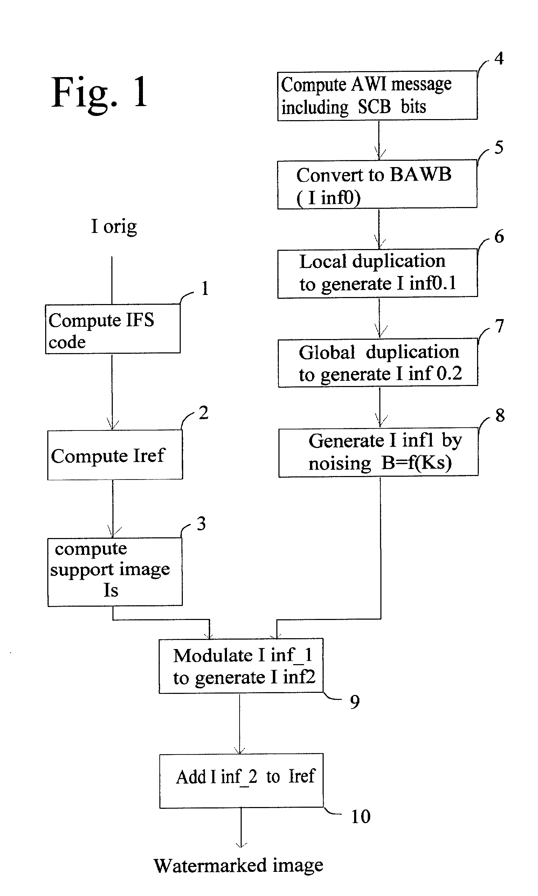

With respect to figure 1 there will now be described the enhanced process for watermarking a digital image. It should be noticed that the process can be employed with any lossy approximation method, such as Jpeg, a cosine coding or by reduction of the resolution. Although any lossy approximation method may be employed, the invention will be particularly described in reference with auto-similarity fractal analysis such as described in detail in the applications PCT/FR99/00485 and EP 1 031 944 assigned to the Assignee of the present application and which contents are herein incorporated by reference. Investigations showed that the auto-similarity fractal analysis is particularly adapted to the insertion and extraction mechanism which will be disclosed hereinafter since it provides a comfortable area within the image for hiding a digital logo of a firm, for instance that of the owner of the above mentioned patent application. Original image $I_{orig}$ is processed according to a first **step 1** in order to generate a Iterated Functions Systems *(IFS)* code which is characteristic of the original image. This processing is based on auto-similarity analysis which results from the fractals theory. But as discussed previously, fractal coding can be replaced by any other lossy coding or approximation.

The invention will be particularly described in reference with image processing in gray shades or levels. In the case of auto-similarity fractal coding, auto-similarity implies describing an image either in terms of «pixels » associated to a gray shade, but under the form : such area is «similar» to such other area, a given transformation modulo. Hereinafter «*context*» will designate a selection of a number of primitives for image cropping, the way they are of laid out, the matching criterion (that is to say the total "distance" between reference image $I_{ref}$ and initial image $I_{orig}$ derived from the elementary "distances" between the various areas), as well as all authorized transformations between primitives.

The initial image to process, called $I_{orig}$, is cropped into a set of primitives, called *ranges,* which must cover the whole image (possibly with an overlapping). Moreover, one basic dictionary Dbase is built which consists of *domain* primitives. The elements of this dictionary are also extracted (by default) from the image itself, but they do not need to cover the whole image to process. There is no particular constraint regarding distribution of the *"domain"* primitives. The dictionary thus built, is then enriched by using geometrical and photometric transformations to form a final dictionary of authorized transformations *Dfinal.* It should be noted that elements can be added to the Dfinal *dictionary* which is not available to external users. Typically affine type transformations will be employed to create new primitives, but other more complex transformations can also be used. Transformations can include geometrical operations, such as isometry (i.e. symmetries, rotations, reflections), or photometric/colometric transformations, in particular on luminance values. In particular, the context will make it possible to determine whether the IFS code has contractivity qualities. It should be noted that to implement the process with the use of software, the defined context is declared with the software responsible for executing calculations relating to the generation and extraction of the mark. Then each *range* primitive must be matched to a dictionary *domain* primitive according to a distance criterion, for example the Minimal Mean Square Error (MMSE) which is well-known to people qualified in the art. Conversely, in some cases it can be interesting to move the reference image $I_{ref}$ away from the original image $I_{orig}$. Usually the Euclidean distance will be used, but other distances can be used.

While indexing the *range* primitives to i, the associated transformation will be noted $w_i$ (i.e. the transformation which defines an element of the basic dictionary, plus a transformation). Local transformations ($w_i$) union will be noted W, the image made up of all *range* primitives and roughly represented from an element of Dfinal will be noted WI, and the attractor associated with W will be noted A if it exists. It will be reminded in this respect that, if the code selected is contractive, it is possible, by using the *"collage theorem"*, to consider attractor A (that is to say the image resulting from n reiterations of transformation W) from any initial image $I_0$ or $I_{init}$ : $A = W^n (I_{init})$, instead of transformation WI, which is the union of *range* blocks that are approximated from $I_{orig}$ : WI is the transform of $I_{orig}$ by W transformation applied once: $W_i = W (I_{orig})$. It is pointed out that a transformation W defines its attractor A, since the transformation W applied n times to any image results in image A when the selected IFS code is contractive. When the selected IFS code is not attractive, then reference image $I_{ref}$ must be derived directly from original image $I_{orig}$ with formula : $I_{ref} = W (I_{orig})$.

Illustratively, in an example of implementation of the invention, the following context which can be classically used in image compression can be considered. The primitives are square blocks, thus operating a 8x8 pixels matrix zoning of *ranges,* and 16x16 pixels matrix zoning for *domains.* Authorized transformations of the fields are : undersampling by 2; 0 ° rotation (that is to say identity), 90° rotation, 180° rotation and 270° rotation; symmetries regarding geometrical transformations; and a shift and scaling operation of luminance values.

In other terms, each local transformation $\omega_i$ can be written as :

$$\omega_i \begin{pmatrix} X \\ Y \\ Z \end{pmatrix} = \begin{pmatrix} a_i & b_i & 0 \\ c_i & d_i & 0 \\ 0 & 0 & s_i \end{pmatrix} \cdot \begin{pmatrix} X \\ Y \\ Z \end{pmatrix} + \begin{pmatrix} u_i \\ v_i \\ o_i \end{pmatrix}$$

where $a_i$, $b_i$, $c_i$, $d_i$ represent the geometrical transformation (over/sub sampling, plus rotation/reflection,...); (x,y) represent the image point coordinates and z represents the associated gray shade ; ($u_i$, $v_i$) represent the displacement which is necessary to match the *domain* primitive position with the corresponding *range* primitive ; $s_i$ and $o_i$ respectively represent scaling and shift of the values of luminance.

Thus, at step 1 in figure 1, the processing aims at describing the image $I_{orig}$ by means of IFS code. To this end, as mentioned above, the original document $I_{orig}$ is cropped into a set of primitives *range(i),* which cover the totality of the original document. Then, a set of primitives *domain(j)* is extracted in order to constitute a dictionary of basic primitives *domain(j)* (Dbase). From the dictionary of basic primitives *domain* (Dbase), is determined a dictionary *Dfinal* of additional *domain* primitives, by applying a set of geometric and/or photometric local transformations $\omega_i$ to basic primitives. In certain modes of realization, it is even possible to introduce secret elements into the *Dfinal* dictionary in order to reinforce the security of the watermarking process. Thereafter, each basic primitive *range(i)* could be paired with a *Domain*(j) primitive included in the primitive dictionary *Dfinal,* in such a way that each primitive *range(i)* is equal to a primitive *domain(j)* transform obtained by a local transformation $\omega_i$, to within about one error $\varepsilon_i$. The image description thus obtained is rather compact, even if the compression effect is not really seeked here. This description is a IFS code that can be concretely gathered in a file in a form which can vary according to the selected mode of realization. It should be noted that the IFS code is very dependent on the determined context, that is to say on the cutting into primitives which is selected, as well as of the chosen set of affine transformations. In particular, it should be noted that, to ensure the marking image reconstitution process robustness, it is necessary that the geometric transformation dictionary be selected to correspond to elementary transformations which the image might undergo and which, during the marking image extraction process, will allow to then reconstitute the logo.

The choice of the dictionary, that is to say the context, enables to ajust qualitative differences between image $I_{ref}$. and image $I_{orig}$. Moreover, when the selected IFS code is not contractive, then, as dicussed before, image $I_{ref}$. directly results from original image $I_{orig}$ by formula $I_{ref} = W (I_{orig})$. On the other hand, when the selected context is contractive, then attractor image is then built from any starting image $I_0$ or $I_{init}$ - black, for example -, by means of a series of images $W^n(I_0)$ which will converge towards a limiting value which is the *attractor* image $I_{ref}$. This property comes from the fractal attractor theory, resulting from the *Mandelbrot*'s fractal mathematical theory and *Hutchinson's* systems of reiterated functions, such as applied to *Barnsley's* image processing.

Whatever the chosen code, contractive or not, **step 2** of the process illustrated in figure 1 thus makes it possible to constitute this $I_{ref}$ image which is necessary to the generation of the support image $I_s$. In the case where another lossy approximation method is being contemplated, such as a jpeg lossy compression, the $I_{ref}$ will be the result of the approximated image.

In **step 3,** $I_{ref}$ image and $I_{orig}$ image are then combined in order to generate *the support image* $I_s$ . To this end a point-by-point subtraction of vectors representative of the image is performed. It should be noted that various compositions of vectors are possible according to circumstances. In particular the vector can be a primary colors vector, red-green-blue, or can include a luminance characteristic component - allowing gray shade processing - even other bands for multispectral image processing produced by satellite imaging. In order to simplify this discussion and to clearly understand the various steps of the operating mode of the invention, only processing of the luminance characteristics components will be discussed, that is to say in gray shades. It is also possible to reproduce the vectorial phases of the process for other components. A difference image with numbers characteristic of gray shade offsets is then obtained.

Simultaneously to steps 1-2 and 3, there will now be described the formatting step of a watermark information (WI) or tattoo which, for instance, can be a digitized logo or any digitized message M such as ASCII text for instance. In one embodiment, the digitized message M can be a 64 bit message which optionally receives a Error Code Correcting (ECC) which will be used in the extraction process for validating the extraction of the watermark and enhancing the reliability of the extraction process. In another embodiment, the *marking image* containing the distinguishing *sign* will be made up of a fixed image adapted to the particular application being considered, for instance a company's logo.

In a **step 4** the watermark information - be it a binary message, ASCII text or a digitized image - is combined with a set of additional bits which will not carry any useful information (relevant to the particular message or watermark to be incorporated) but which will be assigned the specific function of Spatial Compensation Bits (SCB) as will be clearly explained hereinafter in detail. This produces a so-called Aggregate Watermark Information (AWI).

The particular number of Spatial Compensation Bits (SCB) may depend upon the particular application which is considered, and also the security level which is desired. It also depends upon the capacity of the lossy approximation process to "hide" a wide number of bits of the watermark information. It is clear that, from this point of view, the use of the auto-similarity analysis process, as recalled above and described in detail in application PCT/FR99/00485 shows to be particularly adequate because of its substantial capacity to hide digital information in an image. The number of SCB bits to be combined with the initial watermark information also depends upon the number of redundancy levels which are desired, and which closely determines the robustness of the extraction process.

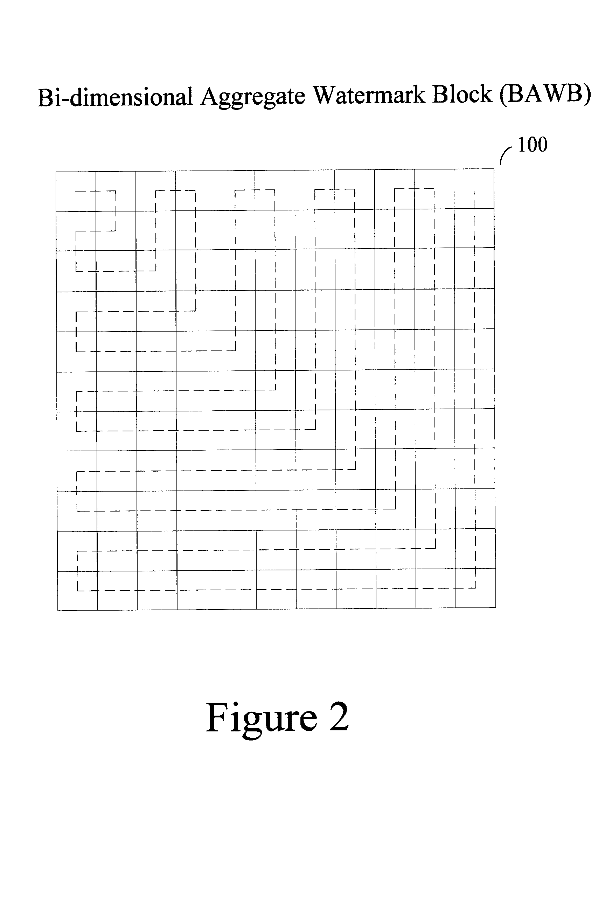

More particularly, the number $n_{bc}$ of SCB synchronization bits can be evaluated as follows. Assuming that $n_{bi}$ the number of bits of the original watermark information or message, and $d_{bc}$ is the ratio of the SCB bits divided by $n_{bi}$. The amount of the computing resources can be optimized if the number of SCB bits lead to a mxm elementary block (such as illustrated in figure 2), what can be formalized by the following equation:

$$n_{bc} = (n_{bc} + n_{bi})^{1/2}$$

Investigations revealed that, for a 64-bit wide watermark information, the number of SCB bits can be set to a value of 57 bits, what results in a AWI information of 121 = 11x11 bits. This advantageously facilitates the conversion step 5 which will then follow.

Regarding the particular contents of the Spatial Compensation Bits (SCB), clearly, any value can be considered. Because of the effect of the noising step 8 which will be discussed below, it even possible to contemplate using a continuous sequence of logical 1 or logical 0 for embodying the SCB synchronization bits. It should be noticed, however, that the use of a pseudo-random sequence of "1" and "0" will substantially increase the secrecy of the mechanism and preserve the insertion process against any malevolent attacks.

The SCB synchronization bits are embedded within the original watermark information. Practically, this can be achieved in different ways. Basically, good results were found when every individual SCB bit is inserted after each individual bit of the watermark information M.

Considering, for instance, the following Watermark Information or message:

M = 0 0 1 0 0 0 0 1 ;

And the SCB bits = **1 1 1 1 1 1 1**

In that case, the resulting Aggregate Watermark Information (AWI) will be:

AWI information = 0 **1** 0 **1** 1 **1** 0 **1** 0 **1** 0 **1** 0 **1** 1 **1**

In a **step 5** the AWI information, including the additional SCB bits, is converted into a corresponding Bi-dimensional Aggregate Watermarking Block (BAWB), what results from the scanning process of the surface area of the image with a predefined pattern. In the case where the original Watermark Information (possibly including a CRC or CCE code) is a 64 bit message which is associated to an additional field of 57 synchronization bits, resulting in a 121 bits AWI information, there will be provided a 11x11 pixels square area for embodying the BAWB block. Figure 2 is an example of a pattern, starting from the top left element of the 11x11 BAWB 100 and which corresponds to a succession of individual horizontal and vertical scanning steps. More particularly, starting from the top left, the 11x11 aggregate watermark binary image is scanned as follows:

one pixel right, one pixel down, one pixel left, one pixel down, two pixels right, two pixels up, one pixel right, three pixels down, three pixels left, one pixel down, four pixels right, four pixels up, one pixel right, five pixels down, five pixels left, one pixel down, six pixels right, six pixels up, one pixel right, seven pixels down, seven pixels left, one pixel down, eight pixels right, eight pixels up, one pixel right, nine pixels down, nine pixels left, one pixel down, ten pixels right and ten pixels up.

Such is an example of a scanning pattern which, clearly, can be replaced by another one.

After the insertion of the SCB bits and conversion, the Bi-dimensional Aggregate Watermarking Block (BAWB) is processed as is processed the $I_{inf\_0}$ image in the above mentioned EP 1031944 application, particularly by adding redundancy within the watermarking image.

In the preferred embodiment, a double redundancy is inserted : a redundancy at local level, followed by another at global level.

**Step 6** consists in the local level of redundancy which is made by means of an oversampling of the BAWB image $I_{inf\_0}$, in order to produce a first intermediate image $I_{inf\_0.1}$. As explained in the above mentioned European application, this oversampling is carried out according to vertical and horizontal directions in the manner of an enlargement or *zooming.* To this end, the BAWB image $I_{inf\_0}$ is enlarged, so that each of its individual pixels is duplicated k times in a vertical direction and j times in a horizontal direction. Therefore, one basic pixel of the BAWB is now represented by k xj identical pixels which are regrouped. Thus, the same pixel is duplicated several times at a local level. This allows introduction of some replication effect, which will allow error correction and wil render the block spatial synchronization easier as will be explained below.

It was determined, for low-pass filterings which do not degrading the marking image-sign quality too much, that a k = j = 3 oversampling factor constituted a suitable parameter in general. This leads to a first possible embodiment. This oversampling involves an offset towards the low frequencies of the original logo, since the level of a bit is maintained with the same value throughout all oversampling. This frequential offset is consistent with the idea that low frequencies will slightly be deteriorated if the image preserves an acceptable quality and, conversely, that high frequencies are likely to disappear during a low-pass filtering not degrading too much the primary marking image -sign, which is classically admitted in the field of lossy compression.

A second embodiment may result from the use of a 11x11 pixels BAWB $I_{inf\_0}$ (corresponding to a 64 bits watermark information plus 57 additional SCB bits as explained above) associated with a simple duplication in both horizontal and vertical direction. In this case, the first intermediate image $I_{inf\_0.1}$ is 22x22 pixels wide.

In a **step 7,** a global duplication is executed for expanding the first intermediate image $I_{inf\_0.1}$, e.g. the 22x22 squared image, to the size of the original image $I_{orig}$. For this purpose, the intermediate image $I_{inf\_0.1}$ is reproduced n times for covering the whole aera of the image $I_{orig}$ to be processed. This results in a second intermediate image $I_{inf\_0.2}$ , properly formatted, thus appears, after enlargement on a local level and pattern duplication on a global level.

The second level of redundancy by duplication is recommended to mitigate an algorithm failure on the local level. It is indeed essential to be protected against any effect resulting from a loss of information on a local level - in a vicinity of some pixels - due to a particular processing of the image. During processing, such as *cropping,* areas of the original image disappear and it would thus be extremely prejudicial that all information enabling reconstitution of the marking image in the extraction process which will described below, be contained in a single area of the image. This second duplication which is carried out on a global level this time, by reproduction of the enlarged logo, still increases the possibility of synchronization and error correction which the step of pixel enlargement on a local level already facilitated. As was explained in the above mentioned European application, the double effect of redundancy which results from formatting step 6 and 7 adds an additional element of robustness.

After the adding of redundancy, at a local level as well as a global level, the second intermediate image $I_{inf\_0.2}$ shows to be perfectly adapted to the size of image $I_{orig}$ to be marked. This image is also binary.

Then, the process involves a noising **step 8** based on a secret key which has the same size as second intermediate image $I_{inf\_0.2}$. Different possibilities can be used for noising that $I_{inf\_0.2}$ image but, clearly, this can be easily achieved by inserting the noise with an EXCLUSIVE OR operation, noted XOR, between second intermediate image $I_{inf\_0.2}$ on one hand and the random noise signal, noted B, on the other hand. This random noise can be generated by an algorithm with a secret key $K_s$. In a particular mode of realization, the key $K_s$ could be constituted of two parts: *a first* part, known as public part, which allows relatively large access to one part of the message, for example to reveal a copyright note, supplemented by a *second* part which will remain more confidential and which, for example, will be reserved to the owner of the right or certification authority for instance. In another mode of realization, the key could include dating data of the external enabling in particular to securely establish the moment of creation of the computer document $I_{orig}$.

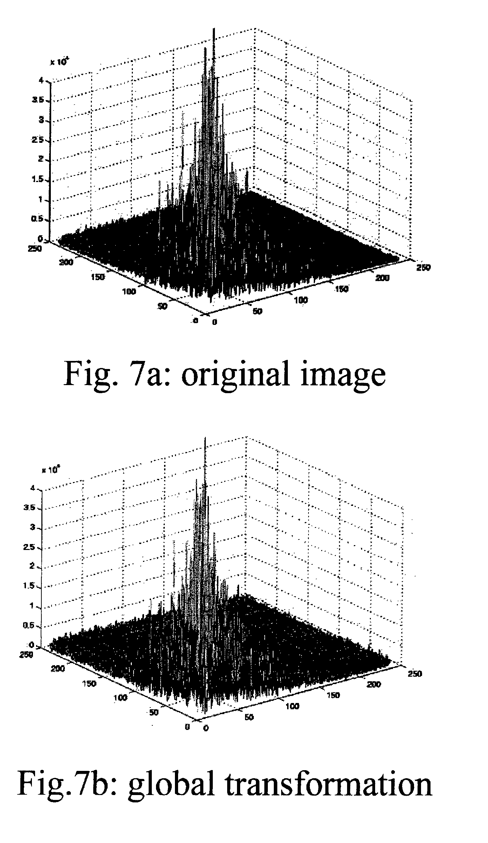

It should be observed, and this is a substantial advantage of the invention, that the noising step 8 which is applied in the process of figure 8 is a global noising step which is performed after the formatting operation of steps 5-7. It has been shown that applying such a global noising step after the global duplication of step 7 considerably increases the security of the process. Conversely, it has been shown that a noising step which is applied after step 5 or 6, and before step 7, renders easier the extraction process (particularly the resynchronization step) of the watermark, but would inevitably increase the exposure to the malvolent intrusions because of the repetition pattern which is much more accessible to the observer. In figure 7A and figure 7B there are illustrated the frequency spectrums of an original image and its watermark versions, when the noising step is applied before the formatting operations of step 7 completes. The secondary peaks in high frequencies are clearly shown, and corresponds to the frequency of the duplication 7. While it is clear that in case of global geometric manipulations of the picture, these peaks could be used for extracting the watermark more easily, those could also serve malevolent intentions. Indeed, crackers could be inclined to remove those, to modify them etc.... The extraction process which will be described hereinafter in detail, since it does not rely on the those frequency peaks, is much more robust.

The result of the processing of step 8 leads to a primary digital information or image $I_{inf\_1}$ , properly noised, which is normally deprived of repetitivity and which incorporates the Spatial Compensation Bits (SCB). Clearly, the noising step 8 brings the double advantage of increasing the security of the marked image and further attenuates the visual effect of the marking process. Indeed, by means of this noise B, information $I_{inf\_1}$ is made perfectly random and statistically independent of the original watermark message M having served for producing the aggregate watermark binary image $I_{inf\_0}$. In practice, a uniform noise can be used on interval [ 0 ; .1 / oversampling *period*]. The maximum frequency is imposed by the period which is adopted during oversampling of the primary image-sign, that is to say the initial logo. Indeed, it is known that it is prejudicial to introduce a frequency signal higher than 1/period of oversampling, for this signal would be very sensitive to low-pass filtering of the image. More generally, the choice of the noise is a matter of optimization understandable to people qualified in the art.

The watermarking process then continues with **step 9** during which *support image* $I_s$ and the primary digital image $I_{inf\_1}$ ,containing the SCB bits and being properly formatted and noised, are combined to produce a secondary digital image $I_{inf\_2}$. In the preferred embodiment, secondary digital image $I_{inf\_2}$ results from a "modulation" or variation of first marking image $I_{inf\_1}$ according to the GAP value contained in support image $I_s$, in accordance with a conventional law of correspondence between GAP and primary digital image $I_{inf\_1}$. Particularly effective results rise from the use of the following law, described in detail in the application PCT/FR99/00485 and which contents are herein incorporated by reference:

if (GAP(x,y) < 0 and $I_{inf\_1}$(x,y) = 0) Or (GAP(x,y) > 0 and $I_{inf\_1}$(x,y) = 1)

then $I_{inf\_2}$(x,y) = GAP(x,y)

if not $I_{inf\_2}$(x,y) = 0

which is concisely written:

$I_{inf\_2}$(x, y) = Inf (GAP(x, y); 0) or Sup (GAP(x, y), 0) according to whether $I_{inf\_1}$ is respectively equal to 0 or to 1.

Operators inf and sup respectively represent the mathematical operators providing respectively the smallest and the largest values considered.

This criterion of correspondence between GAP and $I_{inf\_1}$ makes it possible to establish a binary link between GAP which is coded by its sign (positive or negative), and numerical information to hide from considered the pixel, which is worth 1 or 0. Indeed, it is clear that when $I_{inf\_1}$= 0, only the values of GAP which are negative will be added to the reference document $I_{ref}$, and will carry information. Conversely, when $I_{inf\_1}$=1, only positive values of GAP are added to the reference document and are consequently carrying information. In all the other cases, the value of $I_{inf\_2}$ will be set to 0, which will comes to returning the approximated value of the reference document $I_{ref}$ to build modified image $I'_{orig}$. Rather curiously with the invention it has been seen that the pixels which will be «carrying » primary digital information will tend to qualitatively move away image from $I_{ref}$ and, on the contrary, to bring it closer to $I_{orig}$, thus increasing the original fidelity of the signed image towards the original image. Various alternatives can be introduced on the way of modulating $I_{inf\_2}$ between 0 and the value of GAP, by choosing other terminal values, for example 1 and 1,2 times the value of GAP, instead of 0 and one time the value of GAP.

Once determined, the secondary digital image $I_{inf\_2}$ can then be added to image $I_{ref}$ in a **step 10,** what completes the watermark insertion process.

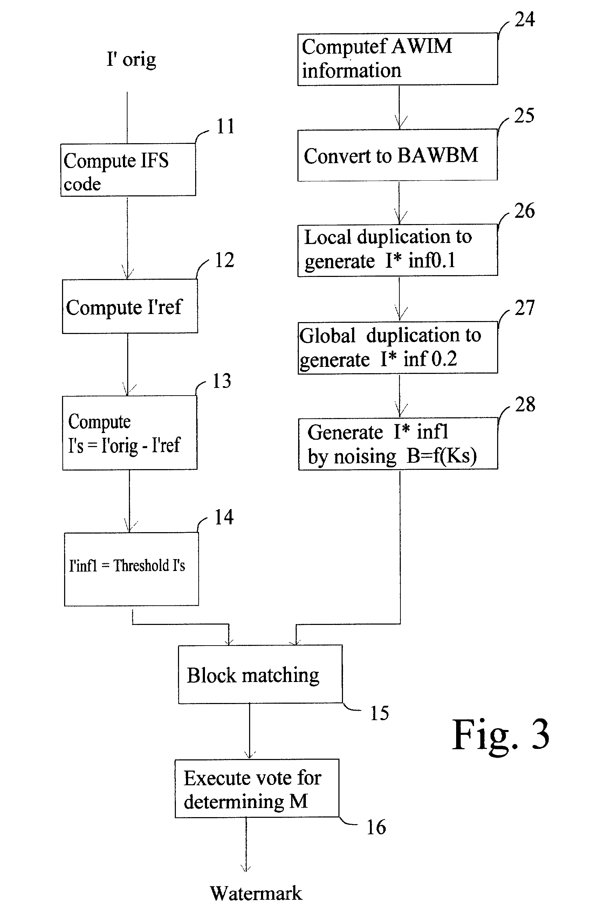

The resulting signed or watermarked image $I'_{orig}$ can then be broadcast. Consequently this signed image can be used, transmitted and undergo transformations. When at a given moment the transmitter of signed image (or any interested third party), is in presence of a similar image, he/she will want to check if this image $I'_{orig}$ carries a signature, and which one. This will be achieved by the **<u>extraction process</u>** which will now be explained in reference to figure 3.

**Step 11** results to calculation of the auto-similarity W ' code associated with $I'_{orig}$ by using the same context as that used for the insertion operation. This results in a IFS code which allows, in **step 12,** building of a reference document, noted $I'_{ref}$ in the general case, or A' in the event of fractal calculation of $I'_{ref}$ by means of a contractive IFS code. Support image $I'_s$, i.e. an estimation of secondary digital image $I'_{inf2}$ can then be recovered at **step 13,** by means of the following relation:

$$I'_s = I'_{inf\,2} = I'_{orig} - A'$$

It should be noted that A' is to $I'_{orig}$ what A was to $I_{orig}$ in the phase of information insertion in $I_{orig}$. The codes IFS which are associated with the $I_{orig}$ images and A are identical (the first by construction and the second by definition of an attractor) and, moreover, each point-image of $I'_{orig}$ is included in the interval defined by its value in $I_{orig}$ and A.

Then, in **step 14,** the support image $I'_s$ is subject to a threshold operation for the subsequent purpose of deriving an estimation of primary digital information $I'_{inf\_1}$ in accordance with the conventional law which was used in the insertion operation :

if $I'_s(x,y)$ > predetermined threshold, then $I'_{inf\_1}$ *(x,y) = 1*

if $I'_s(x,y)$ < threshold then $I'_{inf\_1}$ *(x,y) = 0*

if not «one cannot say » (the pixel (x,y) does not contain any hidden information). By default, the predetermined threshold is fixed to 0, but other larger thresholds can be used to adapt the robustness characteristics of algorithm to the user's needs : other «larger thresholds » can be used in order to limit the risks to be mistaken in each point (x,y), but in this case the number of binary data recovered from whole hidden information is similarly decreased.

Thus the result of the extraction phase of step 14 produces $I'_{inf\_1}$ image which is likely to contain, in a form possibly degraded by intermediate transformations of the signed image, the watermark information which was used during the signature.

In parallel to steps 11-14, the process enters into another branch constituted by steps 24-28, for the purpose of generating a mask which is a reference model of the arrangement of the bits of the original watermark information M, and also the additional Spatial Compensation Bits (SCB), and the way they have been inserted within the original image, and also how the noise was applied on the watermark. To achieve this the process computes a Watermark Information Model (WIM), which incorporates, instead of the particular values carried by the bits forming the original watermark information M (which are not known at this stage of the process) a set of labels M1, M2, M3 etc...., and applies all the processing of steps 4-8 of figure 1 to this set of labels.

In a **step 24** the process computes a Aggregate Watermarking Information Model (AWIM) by adding to the set of labels M1, M2, M3 etc... the additional Spatial Compensation Bits (SCB) in the same way those were inserted in step 14 of figure 1.

In a **step 25** the Aggregate Watermarking Information Model (AWIM), including the additional SCB bits, is converted into a corresponding Bi-dimensional Aggregate Watermarking Block Model (BAWBM), what results from the same scanning process applied in the corresponding step 15.

In a step **Step 26 ,** the first level of redundancy defined in step 16 is applied to the Bi-dimensional Aggregate Watermarking Block Model (BAWBM) in order to produce a first intermediate image model ($I^*_{inf\_0.1}$).

In a **step 27,** the global duplication of step 17 is executed for expanding the first intermediate image model ($I^*_{inf\_0.1}$ ) to a second intermediate image model ($I^*_{inf\_0.2}$).

Then, the process involves a noising **step 28** based on the secret key of step 18, for the purpose of producing a primary digital information model ($I^*_{inf1}$ ) which will be use for permitting the extraction process of the watermark from the primary digital information $I'_{inf\_1}$ computed in step 14.

Once the primary digital information model ($I^*_{inf1}$ ) has been computed, the process may use it for the purpose of achieving a compensation of local moves which could have been introduced within the primary digital information $I'_{inf\_1}$ in a **step 15.** This is performed by means of a Block Matching process which can be performed in the noisy domain - after the noising step - and this is clearly a substantial advantage. The Block Matching process is based on an analysis on individual blocks of NxN pixels in the two $I'_{inf\_1}$ and the $I^*_{inf\_1}$, having for instance a size of 64x64 pixels, for the purpose of researching matching positions of the SCB bits within those blocks. This is achieved by an iterative process which analyses, for each individual block of the primary digital information $I'_{inf\_1}$, possible matching positions of the same block within primary digital information model $I^*_{inf\_1}$ , which maximizes the number of SCB bits which match. Successively, the process starts with the comparison of the considered block at the same position within the $I'_{inf\_1}$ image and computes a corresponding matching result. Then the process executes the same operation and the same computation for the next block in the $I^*_{inf\_1}$ image at one pixel on the left, then two pixels on the left ... Both horizontal and vertical translations can then be tested in the vicinity of the original position of the block. Clearly, the extent of the Block Matching process may depend upon the computing resources available for the process and the level of security which is desired for the watermark extraction process. In one embodiment, the process may even test a set of predefined affine transforms to extend the scope of the search being done within the vicinity of the considered block. It should be noticed that since the number of SCB bits is high, a number of 57 bits can be considered in the preferred embodiment, a very precise level of certainty can be estimated from the detection of the same Spatial Compensation Bits (SCB) arrangements, or a high level of SCB bits corresponding in two corresponding blocks of the $I'_{inf\_1}$ and the $I^*_{inf\_1}$ image.

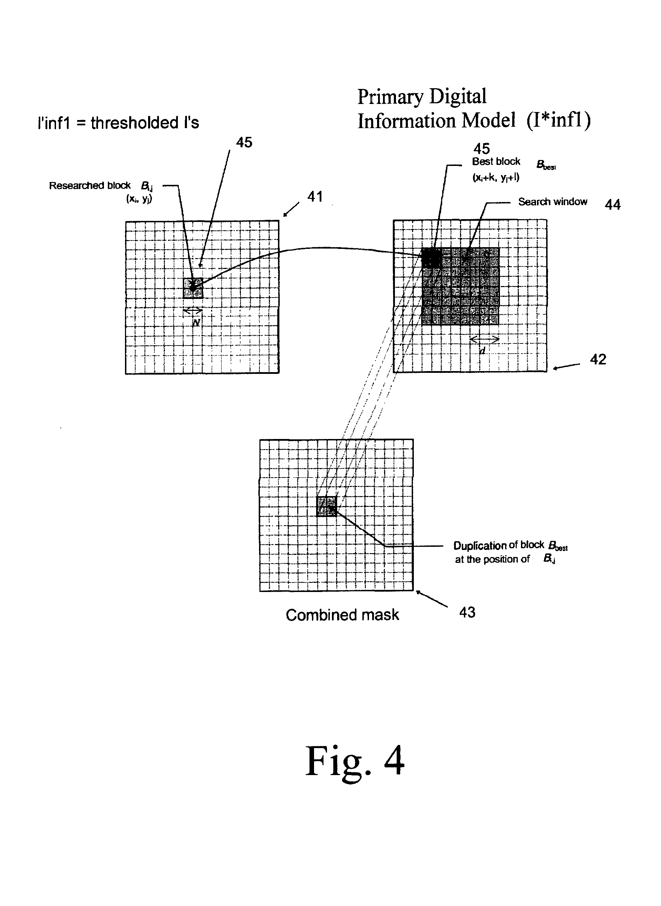

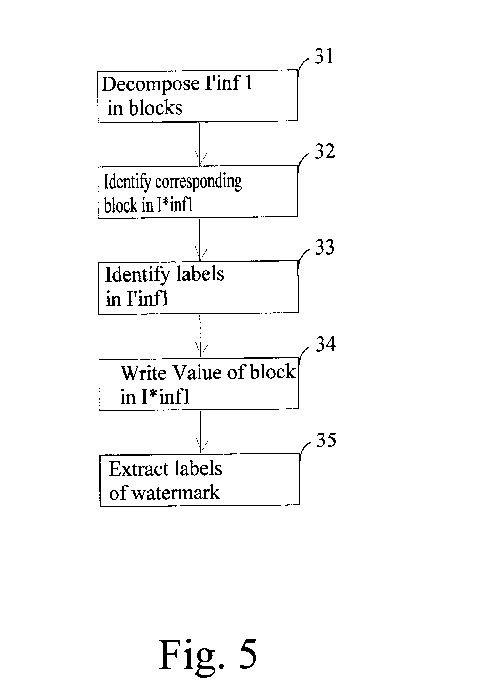

The iterative Block Matching process is performed as illustrated in figure 5. The threshold support image $I'_s$ - ie the primary digital information $I'_{inf\_1}$ illustrated in reference with arrow 41 in figure 4 is divided into blocks B of NxN pixels, in a step 31. Figure 4 particularly illustrates a block 45. For every block $\boldsymbol{B^s}$ considered as the current Block, the process searches in a step 32 a block $\boldsymbol{B_i^m}$ in the $I^*_{inf1}$ image (referred to as Mask block in figure 4), which block which minimizes a distance criteria between both blocks. The search is carried out in a search window of (2d+N)x(2d+N) pixels (illustrated in relation with reference 45 in the figure), which is centered around the initial position of $\boldsymbol{B_i^s}$. The analysis is thus limited to a range of +/- d pixels around that initial position. The Block Matching process can be illustrated by the following algorithm, expressed below, which computes, for each values (x,y) for which $-d \leq x,y \leq +d$, the distance S: Initialize the S score to 0;

For each element k of block $\boldsymbol{B_i^m}$;

IF ($\boldsymbol{B_{i,k}^m}$ = bc$^+$ OU $\boldsymbol{B_{i,k}^m}$ = bc) // situation of one SCB bit;

    IF ($\boldsymbol{B_{i,k}^m}$ = bc$^+$ AND $\boldsymbol{B_{i,k}^s}$ = 1 ) OR ($\boldsymbol{B_{i,k}^m}$ = bc$^-$ AND $\boldsymbol{B_{i,k}^s}$ = 0 ) then S = S +0

    IF ($\boldsymbol{B_{i,k}^m}$ = bc$^+$ AND $\boldsymbol{B_{i,k}^s}$ = 0 ) OR ($\boldsymbol{B_{i,k}^m}$ = bc$^-$ AND $\boldsymbol{B_{i,k}^s}$ = 1 ) then S = S +2

    ELSE S= S+1;       // situation where the element of $I'_{inf\_1}$ carries no information

ELSE S= S+1;       // situation of one bit of information

The process then determines the minimal distance:

$$M = \min\nolimits_{(x,y)} [ S(x,y)]$$

The value S(x,y) is computed for each possible block within the search area of the algorithm. The M value is the minimal of all the different values of S(x,y) within that area. The particular block which is retained is the block which receives the lower value, and the latter B best can be be duplicated in a new image , of the same size than the $I'_{inf1}$ size, at the current position of $\boldsymbol{B_i^s}$ . Once the operation has been executed for all the blocks of the primary digital information $I'_{inf\_1}$, one obtains a new combined Reference mask (see reference 43 in figure 4) which combines the contents of both images. This permits to combine the two images, and achieve a re-synchronization of the two images for the purpose of the watermark extraction that will follow. Practically, for each block being resynchronized, there is carried out a read operation - in a step 33 - then followed by a write operation - in a step 34 - for the purpose of replacing the undetermined labels (including noise) in image $I^*_{inf1}$ by the corresponding values of $I'_{inf1}$.

The particular size of the block is chosen in accordance with the application being considered. Good results were shown with blocks of 64x64 pixels which does not require too much processing resources and which, further, permits to test the matching of a high number of SCB bits.

Once the Block Matching process is completed, the primary digital information is properly synchronized and the de-noising operation of the latter can be achieved, as explained in the above mentioned applications. Preferably , it is even possible to directly compute in a step 35 the values of the different labels M1, M2 , M3 etc... of the original watermark information M for each individual blocks.

In a **step 16,** a vote can be executed for the purpose of validating the values provided for the different labels constituting the watermark, by considering all the different individual blocks which were analyzed. This vote further increases the robustness of the extraction process since it will indicate, where a high level of corresponding values for the labels M1, M2, M3 etc... are being computed. This permits to extract the original watermark information M from the $I'_{inf\_1}$ image, itself extracted from the $I'_{orig}$ image. In the case where the watermark information is associated with one or more ECC fields, an additional validation step can be performed for the purpose of providing a last but not least validation of the extracted watermark.

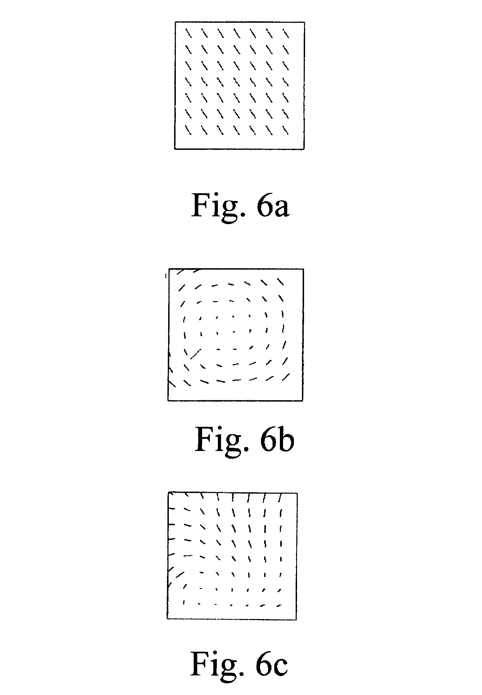

In order to illustrate the advantages brought by the invention, three distinctive situations of global/local modifications will be illustrated in reference to figures 6a, 6b and 6c which show three possibilities of optical flows.

In Fig. 6 a , there is shown a malevolent transformation on the original image which is based on a set of predetermined, regular, slight translations which might be brought by a malevolent individual for the purpose of desynchronizing the $I'_{orig}$ image broadcast by the originator of the image $I_{orig}$.

In Fig. 6B, the local transforms follow circular movements and, in figure 6C, there is illustrated the situation of the random local geometric transformations which can be re-synchronized by means of the above described mechanism.

It should be noticed that the process which was described in detail permits to insert and extract a watermark information in a particular efficient way.

Figure 7A illustrates is a FFT typical spectrum of an original image.

Figure 7B illustrates the spectrum when the image is subject to a global noising step.

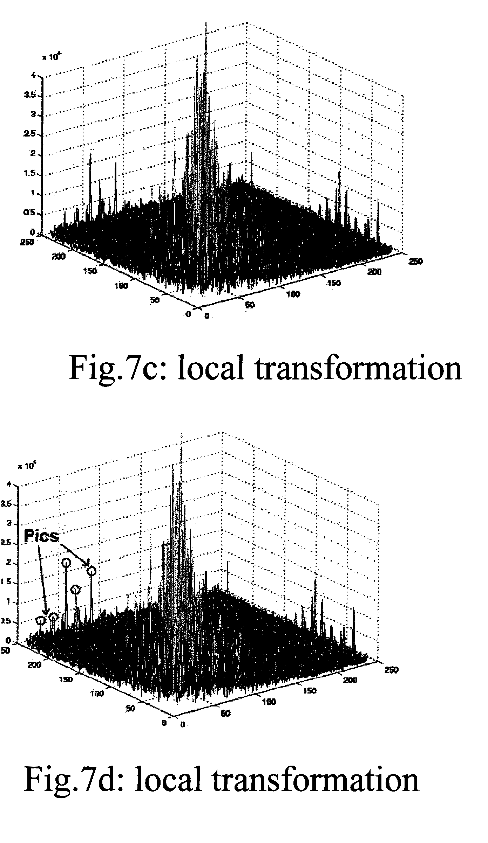

Figure 7C and 7D illustrate the spectrum when the image is subject to a local noising step and figure 7D more particularly focuses on the peaks.

**Claims**

1. Method for marking of a multimedia document $I_{orig}$ such as an image by introducing a tattoo or Watermark Information (WI) being resistant to local transformations brought to said image, **characterized in that** it involves the steps of:

    - combining said watermark information (WI) with added Spatial Compensation Bits (SCB) used for local compensation of elementary local moves brought to said images, the combination of said watermark information (WI) with said Spatial Compensation Bits (SCB) producing an aggregate watermark information (AWI), and
    - formatting and inserting said aggregate watermark information (AWI) within said document.

2. Method of marking of a multimedia document according to claim 1
   **characterized in that** said formatting step involves the noising of the Aggregate Watermark Information (AWI) and **in that** said Spatial Compensation Bits (SCB) are interleaved with said original watermark information.

3. Method according to claim 1 **characterized in that** it involves the steps of:

    - decomposing (1) the initial multimedia document $I_{orig}$ according to a lossy approximation method;
    - determining (2) a reference image $I_{ref}$;
    - point-by-point subtracting (3) the initial document $I_{orig}$ and reference image $I_{ref}$, and according to at least one vector representative of the image in order to produce a support image $I_s$;
    - formatting (4-6) said watermark information so as to obtain an image of the same size as the support image $I_s$ by pre-introducing said Spatial Compensation Bits (SCB) and at least one level of redundancy;
    - noising (8) said formatted watermark information with a pseudo random noise in order to produce a primary digital image $I_{inf\,1}$;
    - point-by-point combining (9) said primary digital image $I_{inf\,1}$ with said support image $I_s$ so as to generate a secondary digital image $I_{inf\,2}$;
    - reintroducing (10) said secondary digital image $I_{inf\,2}$ into said reference image $I_{ref}$ for the purpose of producing said watermarked multi-media document.

4. Method according to claim 3 **characterized in that** said secondary digital image $I_{inf\,2}$ is determined from said primary digital image $I_{inf\,1}$ by means of a law of correspondence between primary digital image $I_{inf\,1}$ and said support image $I_s$

5. Method according to claim 3 **characterized in that** said lossy approximation method is an auto-similarity method based fractal analysis, involving the step of computing a Iterated Functions Systems *(IFS)* code by partitionning said multimedia document $I_{orig}$ into a set of primitives or *ranges,* which must cover the whole image and by using a basic dictionary Dbase of *domain* primitives.

6. Method according to claim 3 wherein said formatting step involves the step of:

    - generating (4) a Aggregate Watermarking Information (AWI) from the watermark information by adding a set of Spatial Compensation Bits (SCB);
    - converting said Aggregate Watermarking Information (AWI) into a Bi-dimensional Aggregate Watermarking Block (BAWB);
    - introducing a local redundancy in a vertical and/or horizontal direction for each pixel of said BAWB block in order to produce a first intermediate image $I_{inf\,0.1}$ ;
    - introducing a global redundancy by duplicating the result of said local duplication for the purpose of producing a second intermediate image $I_{inf\,0\,2}$ of the same size than said image $I_s$ ;
    - noising said second intermediary image $I_{inf\,0\,2}$ for the purpose of producing said primary digital image $I_{inf\,1}$

7. Method according to claim 1 **characterized in that** said aggregate watermark information comprises a watermark information of 64 bits associated with a set of 57 additional Spatial Compensation Bits (SCB).

**8.** Method of extracting a mark used as signature in a digital document $I'_{orig}$ watermarked in accordance with the method of claim 1, comprising the following steps of:

- determining (12) a digital reference document $I'_{ref}$ by means of a lossy approximation method;
- determining (13) the support image $I'_s$ from the following equation:

$$I'_s = I'_{orig} - I'_{ref}.;$$

- thresholding said support image $I'_s$ ;
- creating a Watermark Information Model (WIM), consisting of a set of labels M1, M2, M3 etc...., to which are added said Spatial Compensation Bits (SCB), and to which is then applied the same formatting step that is applied in the insertion process for the purpose of creating a primary digital information model $I^*_{inf1}$ ;
- executing a block matching process for the purpose of synchronizing said threshold $I'_s$ image with said primary digital information model $I^*_{inf1}$ and, after synchronization,
- extracting said watermark from the synchronized threshold I's image.

**9.** Method according to claim 8 **characterized in that** it involves the step of:

- computing (24) a Watermark Information Model (WIM) consisting in a set of labels;
- adding to said WIM model said additional Spatial Compensation Bits (SCB) for the purpose of generating an Aggregate Watermarking Information Model (AWIM);
- converting (25) said Aggregate Watermark information Model (AWIM), into a corresponding Bi-dimensional Aggregate Watermarking Block Model (BAWBM);
- introducing (26) a local level of redundancy into said Bi-dimensional Aggregate Watermarking Block Model (BAWBM) in order to produce a first intermediate image model ($I^*_{inf\_0.1}$ )
- computing (27) a second intermediate image model ($I^*_{inf\_0.2}$ ) from said first intermediate image model ($I^*_{inf\_0.1}$ ) by globally reproducing said first intermediate image model ($I^*_{inf\_0.1}$ );
- noising (28) said second intermediate image model ($I^*_{inf\_0.2}$ ) by means of a secret key for the purpose of producing a primary digital information model ($I^*_{inf1}$ );
- executing (15) a block matching process on said primary digital information model ($I^*_{inf1}$ ) and said threshold $I'_s$ image based on said Spatial Compensation Bits (SCB).

**10.** Method according to claim 8 or 9 wherein said block matching process involves the steps of:

- decomposing said primary digital information model ($I^*_{inf1}$ ) into elementary individual source blocks of nxn pixels,
- for each individual block of nxn pixels, searching a corresponding destination block within said support image I's, located in the vicinity of said source block and which maximizes a criterium based on said Spatial Compensation Bits (SCB), and
- if such a corresponding destination block exists, reading the contents of said destination block and writing it within said source block,
- repeating steps b and c for each individual source block of said primary digital information model ($I^*_{inf1}$ ) until the generation of a resynchronized image support I's.

**11.** Method according to claim 10 wherein, for each bit of said elementary block of said support image I's:

- if said bit corresponds to a label of said watermark information model , reading the contents of said bit and counting the particular value assigned to said label;
- at the end of the process applying a vote for each label in order to determine the particular value assigned to that label, and corresponding to the originally inserted watermark information.

**12.** Method according to claim 9 wherein said block matching process involves the steps of:

- decomposing both said primary digital information model ($I^*_{inf1}$ ) and said threshold $I'_s$ image into elementary blocks of NxN pixels;
- analyzing each elementary block of said threshold $I'_s$ image for the purpose of researching, into a corresponding vicinity of said primary digital information model ($I^*_{inf1}$ ) a maximum number of said Spatial Compensation Bits (SCB).

**13.** Method according to claim 8 or 9 wherein said block matching analysis is used for determining whether the number of said Spatial Compensation Bits (SCB) which are discovered to match both images are interpreted as the existence of a watermark information within digital document $I'_{orig}$.

**14.** Method according to claim 13 wherein, in response to the detection of a sufficient number of Spatial Compensation Bits (SCB) within two matching blocks of said primary digital information model ($I^*_{inf1}$) and said threshold $I'_s$ image, an identification between the contents of the two blocks is executed for directly determining the contents of said watermark information.

**15.** Method according to claim 12 wherein the same identification is executed for all the different blocks for the purpose of carrying out a vote on the contents of said watermark information within digital document $I'_{orig}$ and an evaluation of the validity of its contents.

**16.** Method according to anyone to claim 8 to 15 which further involves a Error Correcting Code applyied on the extracted watermark digital information for the purpose of providing a last confirmation of the extraction process.

**17.** Method according to the claim 9 or 13 **characterized in that** reference image $I_{ref}$ is determined by means of a lossy approximation method such as a Jpeg coding or any process based on a reduction of the image resolution.

**18.** A computer program product having program code elements for carrying out a method as claimed in anyone of claims 1 to 17.

# Fig. 1

Compute AWI message including SCB bits — 4

Convert to BAWB ( I inf0) — 5

Local duplication to generate I inf0.1 — 6

Global duplication to generate I inf 0.2 — 7

Generate I infl by noising B=f(Ks) — 8

I orig

Compute IFS code — 1

Compute Iref — 2

compute support image Is — 3

Modulate I inf_1 to generate I inf2 — 9

Add I inf_2 to Iref — 10

Watermarked image

Bi-dimensional Aggregate Watermark Block (BAWB)

Figure 2

I' orig

Computef AWIM
information ⌐24

Compute IFS
code ⌐11

Convert to BAWBM ⌐25

Compute I'ref ⌐12

Local duplication to
generate I* inf0.1 ⌐26

Compute
I's = I'orig - I'ref ⌐13

Global duplication to
generate I* inf 0.2 ⌐27

I'inf1 = Threshold I's ⌐14

Generate I* inf1
by noising B=f(Ks) ⌐28

Block matching

⌐15

Execute vote for
determining M

⌐16

Watermark

Fig. 3

l'inf1 = thresholded I's

Primary Digital
Information Model  (I*inf1)

45

45
Best block    $B_{best}$
$(x_i+k, y_j+l)$

Researched block    $B_{i,j}$
$(x_i, y_j)$

41

Search window    44

$N$

$d$

42

Duplication of block $B_{best}$
at the position of    $B_{i,j}$

Combined mask    43

Fig. 4

Fig. 5

Fig. 6a

Fig. 6b

Fig. 6c

Fig. 7a: original image

Fig.7b: global transformation

Fig.7c: local transformation

Fig.7d: local transformation

**European Patent Office**

**EUROPEAN SEARCH REPORT**

Application Number

EP 01 48 0036

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EP 1 031 944 A (INST EURECOM G I E) 30 August 2000 (2000-08-30) * the whole document * --- | 1-18 | H04N7/26 |
| Y | ZHICHENG NI ET AL: "Enhancing robustness of digital watermarking against geometric attack based on fractal transform" 2000 IEEE INTERNATIONAL CONFERENCE ON MULTIMEDIA AND EXPO. ICME2000. PROCEEDINGS. LATEST ADVANCES IN THE FAST CHANGING WORLD OF MULTIMEDIA (CAT. NO.00TH8532), PROCEEDINGS OF INTERNATIONAL CONFERENCE ON MULTIMEDIA AND EXPO, NEW YORK, NY, USA, 30 JULY-, pages 1033-1036 vol.2, XP002182300 2000, Piscataway, NJ, USA, IEEE, USA ISBN: 0-7803-6536-4 * the whole document * --- | 1-18 | |
| X A | EP 0 903 943 A (PIONEER ELECTRONIC CORP) 24 March 1999 (1999-03-24) * paragraph [0018] * * figures 1,3,4,10 * --- | 1 2-18 | TECHNICAL FIELDS SEARCHED (Int.Cl.7) H04N G06T |
| X A | DING-YUN CHEN ET AL: "A shift-resisting blind watermark system for panoramic images" 2000 DIGEST OF TECHNICAL PAPERS. INTERNATIONAL CONFERENCE ON CONSUMER ELECTRONICS. NINETEENTH IN THE SERIES (CAT. NO.00CH37102), 2000 DIGEST OF TECHNICAL PAPERS. INTERNATIONAL CONFERENCE ON CONSUMER ELECTRONICS. NINETEENTH IN THE SERIES, LOS ANGLES, , pages 8-9, XP002182301 2000, Piscataway, NJ, USA, IEEE, USA ISBN: 0-7803-6301-9 * the whole document * --- | 1 2-18 | |

-/--

The present search report has been drawn up for all claims

| Place of search | Date of completion of the search | Examiner |
|---|---|---|
| THE HAGUE | 9 November 2001 | Berbain, F |

**European Patent Office**

## EUROPEAN SEARCH REPORT

Application Number

EP 01 48 0036

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PEREIRA S ET AL: "ROBUST TEMPLATE MATCHING FOR AFFINE RESISTANT IMAGE WATERMARKS" IEEE TRANSACTIONS ON IMAGE PROCESSING, IEEE INC. NEW YORK, US, vol. 9, no. 6, June 2000 (2000-06), pages 1123-1129, XP000951913 ISSN: 1057-7149 | 1 | |
| Y | * abstract * * paragraph [0001] * * paragraph [II.D] * | 2-18 | |
| A | PUATE JOAN ET AL: "Using Fractal Compression Scheme to Embed a Digital Signature into an Image" PROCEEDINGS OF THE SPIE, SPIE, BELLINGHAM, VA, US, vol. 2915, 21 November 1996 (1996-11-21), pages 108-118, XP002085678 * the whole document * | 1-18 | |
| A | US 5 949 055 A (FLEET DAVID J ET AL) 7 September 1999 (1999-09-07) * figure A * | 1-18 | TECHNICAL FIELDS SEARCHED (Int.Cl.7) |
| A | US 5 905 819 A (DALY SCOTT J) 18 May 1999 (1999-05-18) * abstract * | 1-18 | |

The present search report has been drawn up for all claims

| Place of search | Date of completion of the search | Examiner |
|---|---|---|
| THE HAGUE | 9 November 2001 | Berbain, F |

**EP 1 259 078 A1**

## ANNEX TO THE EUROPEAN SEARCH REPORT
## ON EUROPEAN PATENT APPLICATION NO.

EP 01 48 0036

This annex lists the patent family members relating to the patent documents cited in the above-mentioned European search report.
The members are as contained in the European Patent Office EDP file on
The European Patent Office is in no way liable for these particulars which are merely given for the purpose of information.

09-11-2001

| Patent document cited in search report | | Publication date | Patent family member(s) | | Publication date |
|---|---|---|---|---|---|
| EP 1031944 | A | 30-08-2000 | FR<br>EP | 2790124 A1<br>1031944 A1 | 25-08-2000<br>30-08-2000 |
| EP 0903943 | A | 24-03-1999 | JP<br>EP<br>US | 11098479 A<br>0903943 A2<br>6246775 B1 | 09-04-1999<br>24-03-1999<br>12-06-2001 |
| US 5949055 | A | 07-09-1999 | EP<br>JP | 0912042 A2<br>11234500 A | 28-04-1999<br>27-08-1999 |
| US 5905819 | A | 18-05-1999 | NONE | | |

For more details about this annex : see Official Journal of the European Patent Office, No. 12/82

25